# EUROPEAN PATENT APPLICATION

(11) **EP 1 696 150 A1**
(43) Date of publication of application: **30.08.2006**
(21) Application number: 05425113.7
(22) Date of filing: 28.02.2005
(51) Int. Cl.: F16G 1/28, B29D 29/08, B65G 15/42

(54) **Toothed belt**

(71) Applicant: Megadyne S.r.l., 1005 Mathi (IT)
(72) Inventor: Tadolini, Marco, 10138 Torino (IT)
(74) Representative: Cerbaro, Elena

(57) **Abstract**

A toothed belt (1) has a body (3) and a number of teeth (8) made of a thermoplastic elastomer; the teeth (8) are covered with a thermoplastic film (9) which includes a first material having the property of adhering to the thermoplastic elastomer at the softening temperature of the thermoplastic elastomer, and a second material which imparts to the toothed outer surface (6) a friction coefficient lower than that of the thermoplastic elastomer.

## Description

The present invention relates to a toothed belt made of a material in the thermoplastic elastomer (TPE) family, which have the elastic properties of elastomers or rubber at ambient temperature, and, at the same time, are workable and recyclable in the same way as thermoplastic materials, with good hardness and resistance characteristics.

Known toothed belts made of thermoplastic elastomer are used, for example, in conveyor applications, and comprise a body, in which a number of threadlike longitudinal reinforcing inserts (so-called "cords") are embedded; and teeth defined by a series of transverse teeth, and which mesh, in use, with corresponding teeth defined by a driven pulley and a drive pulley, about which the belt is looped.

In use, the sides of the belt teeth contact the sides of the pulley teeth, while the rear face of the belt body normally cooperates with a belt tightener. When the teeth begin meshing, contact between the sides of the belt teeth and the sides of the pulley teeth, particularly the driven pulley teeth, is marked by rubbing and tends to produce an annoying squeak.

To reduce the squeaking noise, additives are added directly to the thermoplastic elastomer to reduce the friction coefficient of the outer surface of the teeth.

Additives, however, not only greatly increase the cost of the belt, but, more importantly, impair the mechanical properties - elasticity, hardness, resistance - of the thermoplastic elastomer. A compromise must therefore be sought, which provides for an acceptable reduction in the above mechanical properties, and relatively low friction coefficients at reasonable cost. The end results, however, are never altogether satisfactory.

It is an object of the present invention to provide a toothed belt designed to provide a straightforward, low-cost solution to the above drawbacks, and which is preferably easy to produce.

According to the present invention, there is provided a toothed belt as claimed in Claim 1.

According to the present invention, there is also provided a method of producing a toothed belt, as claimed in Claim 11.

A non-limiting embodiment of the invention will be described by way of example with reference to the accompanying drawings, in which:
Figure 1 shows a schematic, partial view in perspective of a toothed belt in accordance with the present invention;
Figure 2 shows a variation of the Figure 1 toothed belt.

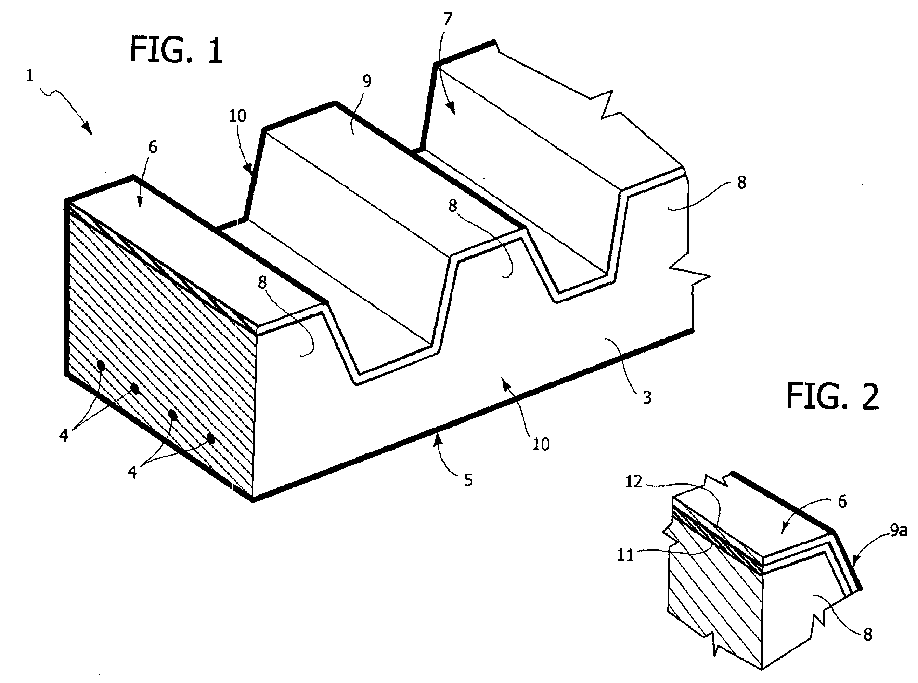

Number 1 in Figure 1 indicates as a whole a toothed belt (shown partly).

Belt 1 extends in an annular longitudinal direction 2, is looped, in use, about a drive pulley and a driven pulley (not shown), and comprises a longitudinal body 3 made of a thermoplastic elastomer (normally abbreviated TPE) in which are embedded a number of threadlike longitudinal reinforcing inserts 4 or so-called "cords" (shown only in cross section).

Belt 1 comprises a rear face 5 defined by body 3; and a toothed front surface 6, which cooperates, in use, with the drive and driven pulleys about which belt 1 is looped, and is defined by teeth 7 shaped with a standard profile in direction 2. Teeth 7 comprise a number of parallel teeth 8 crosswise to direction 2 and formed in one piece with body 3; and a thermoplastic polymer film 9, which covers teeth 8, except for the two opposite longitudinal sides 10 of belt 1, to define surface 6. The thickness of film 9 preferably ranges between 25 micron and 1 millimetre, and, for the sake of clarity, is shown out of scale in the accompanying drawings.

The rear surface, opposite surface 6, of film 9 is fixed to the thermoplastic elastomer of teeth 8 and body 3. To fix it firmly, film 9 comprises a first material which adheres by heat directly to the thermoplastic elastomer of teeth 8 and body 3, preferably during the forming process of belt 1, at the softening temperature of the thermoplastic elastomer.

More specifically, once the thermoplastic elastomer from which to make belt 1 is selected (e.g. on the basis of mechanical characteristics), materials which adhere well to the selected thermoplastic material, and which may therefore be used in film 9, must be determined. A list of materials with good adhesion properties is normally provided by the thermoplastic elastomer supplier or maker, together with other technical data on so-called data sheets.

Preferable thermoplastic elastomers are thermoplastic polyurethanes (normally abbreviated TPU or TPE-U). For example, a thermoplastic polyurethane known by the trade name DESMOPAN (registered trademark) adheres well to materials known by the following trade names: MAKROLON (registered trademark), which is a polycarbonate; NOVODUR (registered trademark), which is an ABS; and BAYBLEND (registered trademark), which is a polycarbonate-ABS mixture. DESMOPAN does not adhere well, however, to polyamides or polyolefins.

In the absence of information from the supplier or maker of the thermoplastic elastomer, to achieve the necessary adhesion of film 9 to teeth 8, a film 9 is selected whose base material is substantially the same as that of the thermoplastic elastomer. For example, if the selected thermoplastic elastomer is a polyurethane, this adheres well with films 9 comprising any polyurethane base material.

Film 9 also comprises a second, antifriction, material, i.e. a material imparting to outer surface 6 a lower friction coefficient than the thermoplastic elastomer. The second material is selectable from PTFE, molybdenum sulphide, graphite, and polyethylene.

In the Figure 1 embodiment, film 9 comprises one layer, in which the second material is mixed with the first material as an additive in relatively high percentages preferably ranging between 2% and 50% by weight.

In the Figure 2 variation, film 9 is replaced by a film 9a comprising a layer 11 contacting the thermoplastic elastomer; and a layer 12 defining surface 6. Layers 11, 12 are superimposed and respectively comprise the first material, which adheres to the thermoplastic elastomer, and the second, antifriction, material. Layers 11, 12 comprise a common component which keeps them joined integrally to each other. Preferably, layer 12 is made of high-density polyethylene (HDPE), while layer 11 comprises a mixture of polyurethane and low-density polyethylene (LDPE). The polyurethane of layer 11 causes the film to adhere to a thermoplastic polyurethane from which teeth 8 and body 3 are made, while the polyethylene joins layers 11 and 12 integrally to each other.

Belt 1 is produced, for example, by injection, by placing film 9 inside a known mold (not shown), on a molding surface defining a negative of the profile of teeth 7. The front face of the film eventually defining surface 6 is positioned facing the molding surface; and, on the opposite side, i.e. on the rear face of film 9, the thermoplastic elastomer is injected to form body 3 and teeth 8.

In the Figure 2 variation, film 9 is positioned with layer 12 facing the molding surface, and with layer 11 facing the space into which the thermoplastic elastomer is injected.

During injection, the heat of the injected thermoplastic elastomer, which is still in the molten state, heats the rear face of film 9, which adheres to the thermoplastic elastomer. If the base material of film 9 and the thermoplastic elastomer are substantially the same or have at least one common component, film 9 and teeth 8 are made integral by heat.

The advantages of toothed belt 1 according to the present invention will be clear from the foregoing description.

In particular, the low friction coefficient of surface 6 reduces friction or rubbing with the pulley teeth, and therefore the in-service noise level of belt 1.

Only adding antifriction material to film 9, 9a keeps the cost of belt 1 relatively low, and/or permits a considerable increase in the percentage of antifriction material, as compared with solutions in which it is added directly to the thermoplastic elastomer, with substantially no change in the mechanical characteristics of belt 1.

Moreover, film 9 being preferably joined to the thermoplastic elastomer of teeth 8 directly during molding, belt 1 is extremely easy to produce.

Belt 1 is also straightforward by involving no adhesives by which to connect film 9, 9a.

Clearly, changes may be made to belt 1 as described herein without, however, departing from the scope of the present invention.

For example, film 9 may be applied to the thermoplastic elastomer during an extrusion or hot-deformation operation, as opposed to injection, and/or after bringing the thermoplastic elastomer teeth to softening temperature at a station separate from the molding station. Also, a thermoplastic elastomer other than thermoplastic polyurethane may be selected.

## Claims

1. A toothed belt (1) comprising a longitudinal body (3) and a number of transverse teeth (8) formed in one piece from a thermoplastic elastomer; the belt having a toothed outer surface (6) which meshes, in use, with drive and driven pulleys, and being **characterized in that** said outer surface is defined by a thermoplastic film (9) covering said thermoplastic elastomer; the film comprising:
- a first material which has the property of adhering directly to said thermoplastic elastomer at a temperature at least equal to the softening temperature of said thermoplastic elastomer; and
- a second material which imparts to said outer surface (6) a friction coefficient lower than that of said thermoplastic elastomer.

2. A belt as claimed in Claim 1, **characterized in that** said first material comprises at least one component in common with said thermoplastic elastomer.

3. A belt as claimed in Claim 1 or 2, **characterized in that** said thermoplastic elastomer is a thermoplastic polyurethane.

4. A belt as claimed in Claims 2 and 3, **characterized in that** said film (9) comprises a polyurethane-base material.

5. A belt as claimed in any one of the foregoing Claims, **characterized in that** said second material is selectable from PTFE, molybdenum sulphide, graphite, and polyethylene.

6. A belt as claimed in any one of the foregoing Claims, **characterized in that** said film (9) comprises one layer, in which said first and said second material are mixed together.

7. A belt as claimed in any one of Claims 1 to 5, **characterized in that** said film (9) comprises a first (11) and a second (12) layer, which are superimposed and comprise said first and said second material respectively.

8. A belt as claimed in Claim 7, **characterized in that** said first and said second layer comprise a component in common.

9. A belt as claimed in Claims 3 and 8,
**characterized in that** said second layer (12) comprises high-density polyethylene, and **in that** said first layer (11) comprises a mixture of polyurethane and polyethylene, and is positioned contacting said thermoplastic polyurethane.

10. A belt as claimed in any one of the foregoing Claims, **characterized in that** said film (9) is of a thickness ranging between 25 micron and 1 millimetre.

11. A method of producing a toothed belt (1) as claimed in any one of the foregoing Claims; the method comprising the step of feeding towards a mold a thermoplastic elastomer at a temperature at least equal to its softening temperature; and being **characterized by** comprising the step, prior to the arrival of said thermoplastic elastomer, of positioning a thermoplastic film (9) on a molding surface for molding a toothed outer surface (6) of said belt; said film (9) comprising:
a) a first material which has the property of adhering directly to said thermoplastic elastomer at a temperature at least equal to the softening temperature of said thermoplastic elastomer; and
b) a second material which imparts to the outer surface (6) a friction coefficient lower than that of said thermoplastic elastomer.

12. A method as claimed in Claim 11, **characterized in that** said film (9) comprises a first and a second layer (11, 12), which are superimposed and comprise said first and said second material respectively; and **in that** said film (9) is positioned with said second layer (12) facing said molding surface, and with said first layer (11) facing the space in which said thermoplastic elastomer is fed.
